# EUROPÄISCHE PATENTSCHRIFT

(11) **EP 3 461 613 B1**
(45) Veröffentlichungstag und Bekanntmachung des Hinweises auf die Patenterteilung: **25.08.2021**
(21) Anmeldenummer: 17193418.5
(22) Anmeldetag: 27.09.2017
(51) Int. Cl.: H02K 1/24, H02K 19/10, H02K 19/06, B29C 48/25, B29C 45/50

(54) **SYNCHRONRELUKTANZMOTOR**
SYNCHRONOUS RELUCTANCE MOTOR
MOTEUR À RÉLUCTANCE SYNCHRONE

(43) Veröffentlichungstag der Anmeldung: 03.04.2019
(73) Patentinhaber: Siemens Aktiengesellschaft, 80333 München (DE)
(72) Erfinder: Geier, Ingo, 90556 Cadolzburg (DE); Kellner, Sven Ludwig, 91052 Erlangen (DE)

(56) Entgegenhaltungen:
- EP-A2- 2 894 767
- US-A1- 2008 296 994
- US-A1- 2010 303 949
- US-A1- 2015 115 758
- "OHNE GETRIEBE", PLASTVERARBEITER, HUETHIG GMBH, HEIDELBERG, DE, Bd. 53, Nr. 9, 1. September 2002 (2002-09-01), Seite 84/85, XP001116280, ISSN: 0032-1338

## Beschreibung

Die Erfindung betrifft die Verwendung eines Synchronreluktanzmotors in einer Produktionsmaschine zur Durchführung eines Extrusionsverfahrens, und der Synchronreluktanzmotor weist einen Stator und einen Rotor auf, wobei ein Blechschnitt des Rotors Flusssperren aufweist.

Für Produktions- oder Verarbeitungsmaschinen in der industriellen Fertigung sind oftmals Antriebslösungen gefordert, welche auf der Synchron-Technologie basieren. Synchronmotoren weisen eine hohe Effizienz und einen hohen Wirkungsgrad auf. Sie werden außerdem für Anwendungen eingesetzt, bei welchen eine belastungsunabhängige, stabile Drehzahl gefordert ist. Insbesondere auch im Teillastbereich ist die Synchron-Technologie aufgrund hoher Effizienzanforderungen vorteilhaft einsetzbar.

Aus dem Stand der Technik sind hochpolige, permanenterregte Synchronmotoren bekannt. Diese Motoren weisen bei sehr kompakter Bauform eine sehr hohe Performance auf. Sie sind insbesondere aufgrund der benötigten Magnete sehr teuer. Für preissensitive Märkte, welche Motoren mit hohem Drehmoment und hoher Performance bei zugleich geringem Preis erfordern, sind daher momentan keine Lösungen verfügbar.

Aus dem Stand der Technik sind ferner sogenannte Synchronreluktanzmotoren bekannt, welche billig sind und daher beispielsweise in der Textilbranche Verwendung finden. Solche Synchronreluktanzmotoren sind mit 2 oder 4 Polen bekannt. In der US-Patentschrift US 5,818,140 ist ein solcher Synchronreluktanzmotor näher beschrieben. Mit solchen bekannten Synchronreluktanzmotoren sind jedoch die geforderten hohen Drehmomentwerte für Produktionsmaschinen in den oben beschriebenen Branchen wie der Kunststoffbranche oder ferner auch der Metall-/ Umformbranche nicht erreichbar.

Aus der US-Patentanmeldungsschrift US 2015/0115758 A1 ist eine permanenterregte Maschine mit einem Rotor mit Permanentmagneten, die eingebettet sind in eine Vielzahl von Aussparungen im Rotor bekannt. Die Elektromotoren sind für den Einsatz in Hybridantrieben in Fahrzeugen beschrieben.

Die europäische Patentanmeldung EP 2894767 A2 zeigt eine elektrische Maschine mit einem Rotor mit einem ringförmigen Aufbau, wobei der Rotor eine Vielzahl von magnetischen Abschnitten und eine Vielzahl von elektromagnetischen Flussbarrieren, die zwischen den magnetischen Abschnitten angeordnet sind, umfasst, wobei die elektrische Maschine eine Reluktanzmaschine ist und der Rotor einen modularen Aufbau aufweist. Die elektrische Maschine wird im Einsatz in einer fluiddynamischen Maschine gezeigt.

Ein Beitrag aus der Zeitschrift PLASTVERARBEITER 53. Jahrg. (2002) Nr. 9 mit dem Titel "Ohne Getriebe" zeigt einen Torquemotor. Es wird beschrieben, dass der Torquemotor nach dem Prinzip eines dreiphasigen bürstenlosen Synchronmotors mit Permanentmagneterregung funktioniert. Die Motorgeometrie ist dabei auf hohe Momente und niedrige Drehzahlen ausgelegt. Erwähnte Einsatzbeispiele dieser drehmomentstarken Langsamläufer sind neben Werkzeugmaschinen vor allem Kunststoffverarbeitungsmaschinen.

Aus der US-Patentanmeldungsschrift US 2008/0296994 A1 ist eine Synchronreluktanzmaschine mit einem Rotor aus einer Anzahl an Verbundfolien bekannt.

Vor diesem Hintergrund ist es eine Aufgabe der vorliegendenden Erfindung, einen verbesserten Synchronmotor für Anwendungen mit hohem gefordertem Drehmoment und zugleich für preissensible Applikationen bereitzustellen. Diese Aufgabe wird durch die Merkmale der unabhängigen Ansprüche gelöst. Vorteilhafte Ausgestaltungen sind in den abhängigen Ansprüchen angegeben.

Die Erfindung betrifft die Verwendung eines Synchronreluktanzmotors in einer Produktionsmaschine zur Durchführung eines Extrusionsverfahrens gemäß Anspruch 1.

Unter einem Synchronreluktanzmotor wird in der vorliegenden Anmeldung ein Motor bestehend aus Rotor und Stator verstanden, bei welchem in einem Synchronbetrieb der physikalische Effekt der Reluktanz zur Drehbewegung des Rotors genutzt wird. Statt des Begriffes Rotor könnte auch der Begriff Läufer verwendet werden. Dabei sind keinerlei Magnete beteiligt. Eine Fortbewegung oder Drehung oder Beeinflussung des Rotors ergibt sich auch nicht aufgrund von elektrischen Strömen im Rotor. Hingegen werden Flusssperren im Blechschnitt des Rotors genutzt, welche im Vergleich zu anderen Abschnitten des Blechschnittes eine geringere Leitfähigkeit aufweisen. Aus der Differenz aus hohem und geringem magnetischen Leitwert resultiert ein gewünschtes Reluktanzmoment, welches die Drehung des Rotors bewirkt.

Es treten somit in dem Rotor keine elektrischen Ströme auf, die den Antrieb bewirken und es befinden sich weder Magnete noch ähnliche felderzeugende Elemente im Läufer. Bei einem sich ändernden Statormagnetfeld, was insbesondere durch geeignete Bestromung von Wicklungen oder Spulen im Stator realisiert wird, entstehen Grenzflächen-Kräfte am Übergang von den Flusssperrenbereichen zu den restlichen Bereichen, welche eine Drehung in die magnetisch optimale Position bewirken. Magnetisch optimale Position bedeutet dabei, dass das System versucht von einem Zustand mit erhöhter Systemenergie aufgrund eines hohen magnetischen Widerstandes in einen Zustand geringer Systemenergie mit geringem magnetischem Widerstand zu gelangen.

Der Rotor ist erfindungsgemäß hochpolig ausgeführt, so dass ein nicht von Fluss durchdrungener Mittelteil des Läufers entsteht. Bislang sind im Stand der Technik höchstens vierpolige Rotoren verwendet worden. Dies liegt daran, dass beim Vorliegen von vier Polen die Flusssperren so angeordnet werden können, dass der Effekt der Grenzflächenkräfte optimiert ist. Es wird dabei kein Eisen "verschenkt", d.h. es gibt annähernd keine Eisen-Bereiche auf dem Blechschnitt, welche ungenutzt sind. Die Flusssperren erstrecken sich fast bis zur Mitte hin, um einen möglichst großen Reluktanz-Effekt zu erzielen. Von diesem optimalen Zustand wurde bislang nicht abgewichen.

Bei einem hochpoligen Rotor sind erfindungsgemäß viele Pole aneinander angeordnet. Ein Pol wird durch ein Flusssperren-Paket gebildet, d.h. aus mehreren Bereichen mit geringem Leitwert im Blechschnitt, welche beispielsweise symmetrisch entlang einer virtuellen, in der Ebene des Blechschnittes liegenden oder senkrecht auf der Rotorachse stehenden und durch den virtuellen Mittelpunkt des Rotors verlaufenden gedachten Achse angeordnet sind. Die einzelnen FlusssperrenBereiche sehen beispielsweise bogenförmig aus und sind nach außen zum Stator hin geöffnet.

Ein hochpoliges Läuferblechpaket bringt den Vorteil mit sich, dass ein hohes Drehmoment bei kleinen Drehzahlen möglich ist. Die kleinen Drehzahlen ergeben sich direkt aus der Hochpoligkeit des Rotors bei gleicher Netzfrequenz des Motors. Dies bewirkt höhere Drehmomente. Somit werden Einsatzmöglichkeiten des hochpoligen Synchronreluktanzmotors vorstellbar, bei welchen ein Getriebe entfällt. Ein hochpoliger Synchronreluktanzmotor kann somit als Direktantrieb ausgeführt werden. Dies ist je nach Applikation vorteilhaft aufgrund der Preisgünstigkeit oder der Einfachheit oder einer geforderten Bauform.

Durch die Hochpoligkeit ist ein weiterer Vorteil erzielbar: Es kann eine Hohlwelle im Mittelteil des Läufers vorgesehen werden. Bekannte Synchronreluktanzmotoren, insbesondere mit vier Polen, weisen hingegen keine Möglichkeit der Aufnahme einer Hohlwelle auf. Der äußerst kleine nicht mit Flusssperren versehene Mittelteil des Rotors weist lediglich Platz für eine Vollwelle auf.

Typischerweise wird die Gesamtgröße des hochpoligen Synchronreluktanzmotors größer sein als die eines bekannten Synchronreluktanzmotors oder die eines permanent erregten Synchronmotors mit vergleichbarem Drehmoment. Die weniger kompakte Bauform ist allerdings für die interessierenden Applikationen weniger relevant als die dadurch erzielte Einsparung beim Preis. Typischerweise liegt ein Durchmesser des beschriebenen hochpoligen Synchronreluktanzmotors im Bereich von über 600 cm, beispielsweise 800cm. Bei bekannten Synchronreluktanzmotoren mit einer Achshöhe von etwa 160 cm und einem Rotordurchmesser von ca. 10 cm blieb für eine Welle ca. ein Durchmesser von 15 mm. Eine Hohlwelle vorzusehen ist daher aufgrund der geforderten Stabilität nicht möglich. Durch die insgesamt größere Bauart und ein Loslösen von der bisherigen Vierpoligkeit des Rotors kann der bislang als unnütz angesehene mittlere Teil eines Blechschnittes bewusst ausgespart werden, um die Welle anzubringen.

Ebenso sind Ausgestaltungen denkbar, bei denen eine kompakte Bauform - vergleichbar mit der von permanenterregten Synchronmotoren oder bekannten Synchronreluktanzmotoren - beibehalten wird. Je mehr Drehmoment an der Welle erzeugt werden soll, d.h. je mehr magnetischer Fluss quasi auf der Fläche des Blechschnittes zum Erzeugen des Drehmomentes untergebracht werden muss, desto größer muss jedoch letztlich bei gleicher Länge des Motors der Durchmesser des Blechschnittes werden. Daher werden Anwendungen, in denen eine besonders große Performance, also besonders hohe Drehmomente benötigt werden, vorteilhafterweise auch größere Bauformen aufweisen, je nach Bedarf mit Vollwelle oder Hohlwelle.

Gemäß einer Ausgestaltung weist der Blechschnitt aufgrund der Flusssperren Bereiche mit hohem Leitwert, insbesondere gebildet aus eisenbasiertem Material, und Bereiche mit geringem Leitwert, insbesondere luftgefüllte Aussparungen, auf. Die Grenzflächenkräfte wirken somit am Eisen-Luft-Übergang. Dabei sind die Flusssperrenbereiche insbesondere bogenförmig symmetrisch zu Achsen durch den Mittelpunkt des Rotors angeordnet. Insbesondere sind mehrere bogenförmige Flusssperrenbereiche hintereinander symmetrisch zu einer Achse durch den Mittelpunkt des Rotors, das heißt symmetrisch von innen nach außen entlang des Blechschnittes angeordnet. Die Zwischenbereiche zwischen den Flusssperren, das heißt insbesondere das durch die Aussparungen verbleibende Eisen, sind ebenfalls bogenförmig angeordnet. Bogenförmig bedeutet dabei, dass die Form einem Abschnitt eines Kreisbogens ähnelt, dessen gedachter Mittelpunkt außerhalb des Rotors, und zwar außerhalb auf der Seite des Poles liegt, beispielsweise auf der Verlängerung der gedachten in der Ebene des Blechschnittes verlaufenden Achse mit Ursprung im gedachten Rotormittelpunkt entlang der Flusssperren des Poles über den Stator hinaus. Die Bögen sind somit nach außen geöffnet. Insbesondere können je Pol drei Aussparungen, welche bogenförmig übereinander angeordnet sind, vorgesehen sein. Je höherpolig der Rotor ausgeführt ist, desto mehr Eisen würde im Inneren des Rotors quasi verschenkt zurückbleiben, da sich keine Grenzflächen zwischen Aussparung und Blech mehr anordnen lassen, die zu einer Verstärkung der Ausrichtung des Rotors in die optimale magnetische Position beitragen könnten. Daher ist das Vorsehen einer gerade so großen Hohlwelle, dass im Wesentlichen von Flusssperren durchzogene Bereiche des Blechschnittes vorliegen, besonders vorteilhaft.

Gemäß einer Ausgestaltung weist der Rotor mindestens sechs Pole, insbesondere mindestens zehn Pole und insbesondere mindesten 20 Pole, auf. Bereits das Vorsehen von sechs Polen ermöglicht eine größere Hohlwelle als bislang im Einsatz. Auch hierbei geht quasi Grenzflächen-geeignete Fläche im Inneren des Rotors verloren, welcher für eine Hohlwelle genutzt werden kann. Besonders vorteilhaft und groß ist der Effekt bei zehn oder mehr Polen und insbesondere bei 20 oder mehr Polen. In diesem Bereich wirkt sich insbesondere der Effekt der kleinen Drehzahl und des entsprechend großen Drehmomentes bei gleicher Leistung besonders vorteilhaft aus.

Gemäß einer Ausgestaltung weist der Stator eine auf die Rotorpolzahl angepasste Anzahl an Statorwicklungen auf. Der Stator ist hinsichtlich seiner verteilten Wicklungen auf die vorgesehene Polzahl des Rotors, welche durch die Ausführung des Läuferblechpaketes festgelegt wird, anzupassen.

Eine ist im Rotor vorgesehen. Diese Hohlwelle ist Extrusionsverfahren, bei welchen der hochpolige Synchronreluktanzmotor eingesetzt werden soll, vorteilhaft. Beispielsweise ermöglicht das Vorsehen einer Hohlwelle für solche Anwendungen die Montage oder Demontage einer Extruderschnecke.

Gemäß einer Ausgestaltung beträgt der Durchmesser der Hohlwelle in etwa Dreiviertel des Rotordurchmessers. Das Vorsehen genügend vieler Pole durch den Blechschnitt mit entsprechend vielen entlang des Umfangs des Blechschnittes angeordneten Flusssperrenpaketen ermöglicht eine entsprechend große Hohlwelle. Vorteilhafterweise füllt die Hohlwelle den gesamten nicht vom Fluss durchdrungenen Mitteilteil des Läufers aus. Gemäß einer Ausgestaltung ist der Synchronreluktanzmotor als Direktantrieb ausgeführt. Dafür wird das benötigte Drehmoment bei der Ausgestaltung der Flusssperren und der Auswahl der Anzahl der Pole berücksichtigt, um eine entsprechend passende Drehzahl erreichen zu können.

Gemäß einer Ausgestaltung weist der Synchronreluktanzmotor eine Achshöhe von mehr als 300 cm auf. Ebenso sind Achshöhen von etwa 400 cm vorstellbar. So wird der Effekt eines ausreichend großen Drehmoments aufgrund der kleinen Drehzahl noch durch die Bereitstellung eines entsprechend großen Durchmessers des Rotors mit entsprechend viel zu den Grenzflächenkräften beitragenden Übergängen zwischen Fluss-Bereichen und Flusssperren-Bereichen verstärkt.

Beispielsweise ist der Einsatz des beschriebenen Synchronreluktanzmotors in kunststoffverarbeitenden Maschinen wie Spritzgussmaschinen, Blasformmaschinen, Extrudern oder sonstigen Pressen vorteilhaft, in welchen große Kräfte und eine hohe Performance benötigt werden. Auch die Anwendung für Werkzeugmaschinen, beispielsweise bei Rundtischantrieben, ist vorteilhaft.

Die Hohlwelle ist zur Durchführung einer Extruderschnecke ausgebildet.

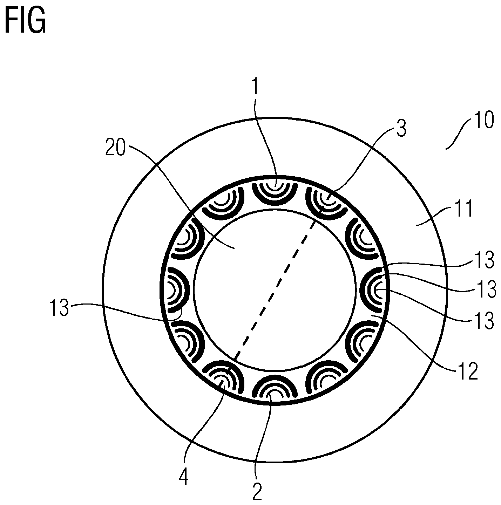

Die Erfindung wird nachfolgend anhand eines Ausführungsbeispiels mit Hilfe der Figur näher erläutert.

Die Figur zeigt schematisch einen Querschnitt durch einen Motor mit Rotor und Stator, wobei der Querschnitt entlang einer Ebene, welche senkrecht auf der Rotationsachse des Läufers steht, verläuft. Ein solcher Querschnitt wird auch Blechschnitt genannt. Es handelt sich bei dem Motor um einen Synchronreluktanzmotor 10 gemäß einem Ausführungsbeispiel der Erfindung. Der Stator 11 ist dabei, wie bei Synchronmotoren üblich, aus Wicklungen aufgebaut, welche einzeln oder in Gruppen oder nacheinander mittels eines Umrichters bestromt werden, um ein sich veränderndes Magnetfeld erzeugen zu können. Im Inneren des Stators 11 befindet sich der Rotor 12.

Abgebildet ist ein Blechschnitt des Rotors 12 mit für einen Synchronreluktanzmotor typischen Flusssperren 13. Die Flusssperren 13, beziehungsweise die sich abwechselnden Bereiche aus Flusssperren 13 und beispielsweise Bereichen aus Eisen, welche die Basis des Rotors 12 bilden, sind für den physikalischen Effekt der Drehmomenterzeugung aufgrund der Reluktanz verantwortlich. Ein Paket aus Flusssperren sieht beispielsweise dergestalt aus, dass mehrere bogenförmige Flusssperrenabschnitte konzentrisch um einen gedachten Mittelpunkt des Rotors angeordnet sind. Die Öffnung der bogenförmigen Abschnitte weist dabei nach außen. Die Aussparungen, welche die Flusssperren ausbilden, wachsen entsprechend in ihrer Länge und Breite nach innen hin an.

Im gezeigten Beispiel ist ein zwölfpoliger Rotor 12 dargestellt. Ein erster Pol 1 weist jeweils einen dazugehörigen zweiten Pol 2 auf, mit welchem er ein sogenanntes Polpaar bildet. Ebenso weist ein dritter Pol 3 einen gegenüberliegenden Pol 4 auf. Als Anzahl der Pole kommt für einen Läufer insbesondere nur eine geradzahlige Anzahl in Frage.

Durch die Anzahl der vorgesehenen Pole werden zugleich die Ausmaße oder die Ersteckung eines Flusssperrenpaketes, welches einen Pol bildet, festgelegt. Je mehr Pole vorgesehen sind, desto kleiner ist ein gedachter Durchmesser der Flusssperrenbogen je Pol. Dabei ist eine sinnvolle Mindestgröße eines Flusssperrenpaketes anzunehmen und die Bauform des Motors entsprechend in der Größe anzupassen. Entsprechend größer wird zugleich der Bereich auf dem Blechschnitt, welcher nicht zur Ausbildung der Grenzflächenkräfte am Übergang zwischen Luft und Eisen mitwirken kann. Dieser Bereich ist im Hinblick auf ein erzeugbares Reluktanzmoment zu vernachlässigen. Zugleich kann gerade dieser Bereich allerdings vorteilhaft genutzt werden, in dem eine relativ große Hohlwelle im Läufer vorgesehen wird.

Ein hochpoliger Synchronreluktanzmotor bringt wie oben dargestellt die Vorteile mit sich, dass bei kleinen Drehzahlen hohe Drehmomente erzeugt werden können und somit eine Ausführung als Direktantrieb möglich ist. Somit kann auf ein Getriebe verzichtet werden. Eine Hohlwelle ist im Inneren des Läufers vorgesehen und kann für Anwendungen, in welchen große Kräfte benötigt werden und zugleich kostengünstige Motoren verbaut werden sollen, vorteilhaft eingesetzt werden. Die niedrigen Kosten ergeben sich insbesondere durch den Verzicht auf Magnete und stattdessen das Ausnutzen der Synchron-Reluktanztechnologie. Aufgrund der hochpoligen Ausführung wird die Möglichkeit geschaffen, dennoch hohe Drehmomente zu erzeugen. Zugleich ist eine hohe Energieeffizienz im gesamten Betriebsbereich, das heißt bei Teillast und Volllast, sichergestellt.

Obwohl die Erfindung im Detail durch das Ausführungsbeispiel näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verwendung eines Synchronreluktanzmotors (10) in einer Produktionsmaschine zur Durchführung eines Extrusionsverfahrens, wobei der Synchronreluktanzmotor einen Stator (11) und einen Rotor (12) aufweist, wobei ein Blechschnitt des Rotors Flusssperren (13) aufweist, wobei der Rotor hochpolig ausgeführt ist, wobei ein jeweiliger Pol durch ein Flusssperren-Paket gebildet wird, wobei der Rotor mindestens sechs Pole aufweist, wobei als Bestandteil der Produktionsmaschine eine Hohlwelle (20) im Rotor vorgesehen ist und die Hohlwelle (20) zur Durchführung einer Extruderschnecke ausgebildet ist, wobei eine gerade so große Hohlwelle eingesetzt wird, dass im Wesentlichen von Flusssperren durchzogene Bereiche des Blechschnittes vorliegen.

2. Verwendung eines Synchronreluktanzmotors nach Anspruch 1, wobei der Blechschnitt aufgrund der Flusssperren (13) Bereiche mit hohem Leitwert, insbesondere gebildet aus eisenbasiertem Material, und Bereiche mit geringem Leitwert, insbesondere luftgefüllte Aussparungen, aufweist.

3. Verwendung eines Synchronreluktanzmotors nach Anspruch 1 oder 2, wobei der Rotor (12) mindestens zehn Pole, insbesondere mindestens 20 Pole, aufweist.

4. Verwendung eines Synchronreluktanzmotors nach einem der vorstehenden Ansprüche, wobei der Stator (11) eine auf die Rotorpolzahl angepasste Anzahl an Statorwicklungen aufweist.

5. Verwendung eines Synchronreluktanzmotors nach einem der vorstehenden Ansprüche, wobei ein Durchmesser der Hohlwelle (20) in etwa ¾ des Rotordurchmessers beträgt.

6. Verwendung eines Synchronreluktanzmotors nach einem der vorstehenden Ansprüche, wobei der Synchronreluktanzmotor (10) als Direktantrieb ausgeführt ist.

7. Verwendung eines Synchronreluktanzmotors nach einem der vorstehenden Ansprüche, wobei der Synchronreluktanzmotor eine Achshöhe von mehr als 300cm aufweist.

## Claims

1. Use of a synchronous reluctance motor (10) in a production machine for carrying out an extrusion method, wherein the synchronous reluctance motor has a stator (11) and a rotor (12), wherein a laminate section of the rotor has flux barriers (13), wherein the rotor is embodied with a high number of poles, wherein a respective pole is formed by a flux barrier stack, wherein the rotor has at least six poles, wherein a hollow shaft (20) is provided in the rotor as a constituent part of the production machine and the hollow shaft (20) is designed to feed through an extruder screw, wherein a hollow shaft that is precisely so large that regions of the laminate section that are substantially traversed by flux barriers are present is used.

2. Use of a synchronous reluctance motor according to Claim 1, wherein, on account of the flux barriers (13), the laminate section has regions having a high conductance, in particular formed from iron-based material, and regions having a low conductance, in particular air-filled recesses.

3. Use of a synchronous reluctance motor according to Claim 1 or 2, wherein the rotor (12) has at least ten poles, in particular at least 20 poles.

4. Use of a synchronous reluctance motor according to one of the preceding claims, wherein the stator (11) has a number of stator windings adapted to the number of rotor poles.

5. Use of a synchronous reluctance motor according to one of the preceding claims, wherein a diameter of the hollow shaft (20) is approximately ¾ of the rotor diameter.

6. Use of a synchronous reluctance motor according to one of the preceding claims, wherein the synchronous reluctance motor (10) is embodied as a direct drive.

7. Use of a synchronous reluctance motor according to one of the preceding claims, wherein the synchronous reluctance motor has an axis height of more than 300 cm.

## Revendications

1. Utilisation d'un moteur à réluctance synchrone (10) dans une machine de production pour mettre en œuvre un procédé d'extrusion, le moteur à réluctance synchrone comportant un stator (11) et un rotor (12), dans laquelle une découpe de tôle du rotor présente des barrières de flux (13), le rotor étant de configuration à polarité élevée, un pôle respectif étant constitué par un ensemble de barrières de flux, le rotor présentant au moins six pôles, un arbre creux (20) étant prévu dans le rotor faisant partie de la machine de production et l'arbre creux (20) étant conçu pour être traversé par une vis d'extrusion, la taille de l'arbre creux étant juste de sorte que se présentent des zones des découpes de tôle traversées essentiellement par des barrières de flux.

2. Utilisation d'un moteur à réluctance synchrone selon la revendication 1, dans laquelle, dû aux barrières de flux (13), la découpe de tôle présente des zones à haute conductivité, notamment réalisées en un matériau à base de fer, et des zones à faible conductivité, notamment des évidements remplie d'air.

3. Utilisation d'un moteur à réluctance synchrone selon la revendication 1 ou 2, dans laquelle le rotor (12) comporte au moins dix pôles, notamment au moins 20 pôles.

4. Utilisation d'un moteur à réluctance synchrone selon l'une des revendications précédentes, dans laquelle le stator (11) comporte un nombre d'enroulements de stator adapté au nombre des pôles du rotor.

5. Utilisation d'un moteur à réluctance synchrone selon l'une des revendications précédentes, dans laquelle le diamètre de l'arbre creux (20) correspond à peu près à ¾ de diamètre du rotor.

6. Utilisation d'un moteur à réluctance synchrone selon l'une des revendications précédentes, dans laquelle le moteur à réluctance synchrone (10) est conçu comme entraînement direct.

7. Utilisation d'un moteur à réluctance synchrone selon l'une des revendications précédentes, dans laquelle le moteur à réluctance synchrone présente une hauteur d'axe supérieure à 300 cm.
